# EUROPEAN PATENT SPECIFICATION

(11) **EP 1 559 203 B1**
(45) Date of publication and mention of the grant of the patent: **04.05.2011**
(21) Application number: 03810699.3
(22) Date of filing: 05.11.2003
(51) Int. Cl.: H04W 28/06

(54) **PROCESSING DATA UNITS FOR TRANSFER OVER THE SAME CHANNEL**
VERARBEITUNG VON DATENEINHEITEN FÜR DEN TRANSFER ÜBER DEN SELBEN KANAL
TRAITEMENT DES UNITES DE DONNEES DESTINEES AU TRANSFERT PAR LE MEME CANAL

(30) Priority: 05.11.2002 KR 2002068202
(43) Date of publication of application: 03.08.2005
(60) Divisional application: 10196328.8
(73) Proprietor: LG ELECTRONICS INC., Youngdungpo-Gu Seoul 150-010 (KR)
(72) Inventor: YI, Seung-June, 135-240 Seoul (KR); LEE, Young-Dae, 465-711 Hanam, Gyeonggi-Do (KR); LEE, So-Young, 435-050 Gunpo, Gyeonggi-Do (KR)
(74) Representative: TER MEER - STEINMEISTER & PARTNER GbR
(86) International application number: PCT/KR2003/002352
(87) International publication number: WO 2004/042952

(56) References cited:
- EP-A- 1 176 780
- WO-A-01/69952
- JP-A- 1 231 542
- JP-A- 10 210 067
- KR-A- 2001 063 754
- US-A- 5 917 820
- US-A1- 2002 037 000
- "Universal Mobile Telecommunications System (UMTS); Multiplexing and channel coding (FDD) (3GPP TS 25.212 version 5.2.0 Release 5); ETSI TS 125 212" ETSI STANDARDS, LIS, SOPHIA ANTIPOLIS CEDEX, FRANCE, vol. 3-R1, no. V5.2.0, 1 September 2002 (2002-09-01), XP014008371 ISSN: 0000-0001

## Description

### TECHNICAL FIELD

The present invention relates to data transmissions in a radio (wireless) communication system and, more particularly, to processing data units for transfer over the same channel in a radio communication system.

### BACKGROUND ART

Recently, mobile communication systems have developed remarkably, but for high capacity data communication services, the performance of mobile communication systems cannot match that of existing wired communication systems. Accordingly, technical developments for IMT-2000, which is a communication system allowing high capacity data communications, are being made and standardization of such technology is being actively pursued among various companies and organizations.

A universal mobile telecommunication system (UMTS), which is a European-type IMT-2000 system, is a third generation mobile communication system that has evolved from a European standard known as Global System for Mobile communications (GSM) that aims to provide an improved mobile communication service based upon a GSM core network and wideband code division multiple access (W-CDMA) wireless connection technology.

In December 1998, the ETSI of Europe, the ARIB/TTC of Japan, the T1 of the United States, and the TTA of Korea formed a Third Generation Partnership Project (3GPP), which is creating the detailed specifications of the UMTS technology.

Within the 3GPP, in order to achieve rapid and efficient technical development of the UMTS, five technical specification groups (TSG) have been created for performing the standardization of the UMTS by considering the independent nature of the network elements and their operations.

Each TSG develops, approves, and manages the standard specification within a related region. Among these groups, the radio access network (RAN) group (TSG-RAN) develops the standards for the functions, requirements, and interface of the UMTS terrestrial radio access network (UTRAN), which is a new radio access network for supporting W-CDMA access technology in the UMTS.

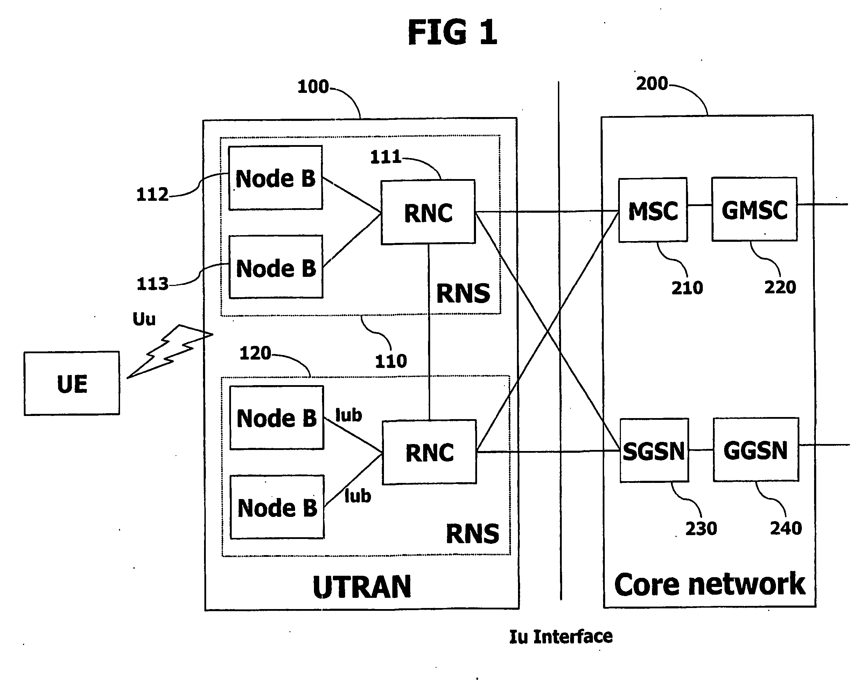

Figure 1 illustrates an exemplary basic structure of a general UMTS network. As shown in Figure 1, the UMTS is roughly divided into a terminal (or user equipment: UE), a UTRAN 100, and a core network (CN) 200.

The UTRAN 100 includes one or more radio network sub-systems (RNS) 110, 120. Each RNS 110, 120 includes a radio network controller (RNC) 111, and a plurality of Node-Bs 112, 113 managed by the RNC 111. The RNC 111 handles the assigning and managing of radio resources, and operates as an access point with respect to the core network 200.

The Node-Bs 112, 113 receive information sent by the physical layer of the terminal through an uplink, and transmit data to the terminal through a downlink. The Node-Bs 112, 113, thus, operate as access points of the UTRAN 100 for the terminal.

A primary function of the UTRAN 100 is forming and maintaining a radio access bearer (RAB) to allow communication between the terminal and the core network 200. The core network 200 applies end-to-end quality of service (QoS) requirements to the RAB, and the RAB supports the QoS requirements set by the core network 200. As the UTRAN 100 forms and maintains the RAB, the QoS requirements of end-to-end are satisfied. The RAB service can be further divided into an lu bearer service and a radio bearer service. The lu bearer service supports a reliable transmission of user data between boundary nodes of the UTRAN 100 and the core network 200.

The core network 200 includes a mobile switching center (MSC) 210 and a gateway mobile switching center (GMSC) 220 connected together for supporting a circuit switched (CS) service, and a serving GPRS support node (SGSN) 230 and a gateway GPRS support node 240 connected together for supporting a packet switched (PS) service.

The services provided to a specific terminal are roughly divided into the circuit switched (CS) services and the packet switched (PS) services. For example, a general voice conversation service is a circuit switched service, while a Web browsing service via an Internet connection is classified as a packet switched (PS) service.

For supporting circuit switched services, the RNCs 111 are connected to the MSC 210 of the core network 200, and the MSC 210 is connected to the GMSC 220 that manages the connection with other networks.

For supporting packet switched services, the RNCs 111 are connected to the SGSN 230 and the GGSN 240 of the core network 200. The SGSN 230 supports the packet communications going toward the RNCs 111, and the GGSN 240 manages the connection with other packet switched networks, such as the Internet.

Various types of interfaces exist between network components to allow the network components to transmit and receive information to and from each other for mutual communication therebetween. An interface between the RNC 111 and the core network 200 is defined as an lu interface. In particular, the lu interface between the RNCs 111 and the core network 200 for packet switched systems is defined as "lu-PS," and the lu interface between the RNCs 111 and the core network 200 for circuit switched systems is defined as "lu-CS."

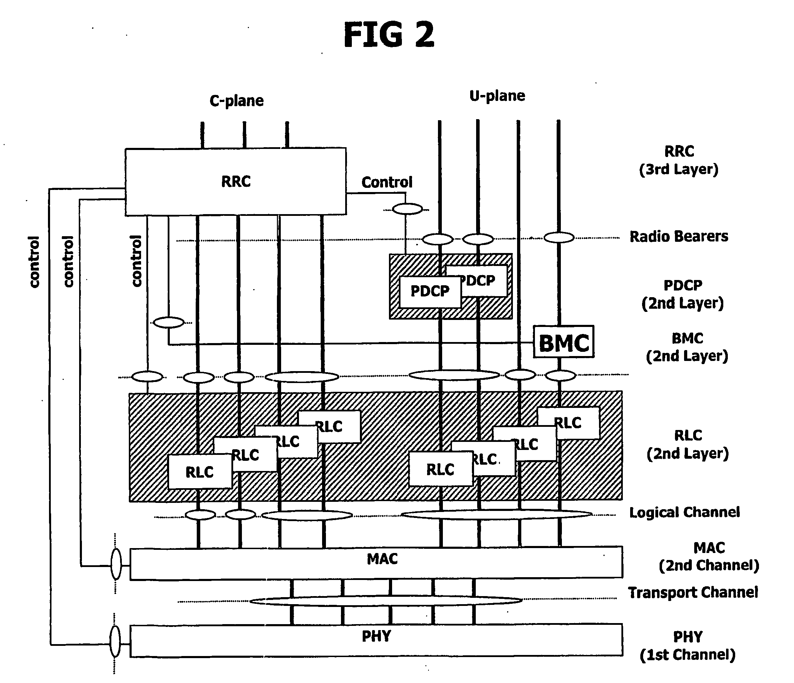

Figure 2 illustrates a structure of a radio interface protocol between the terminal and the UTRAN 100 according to the 3GPP radio access network standards.

As shown in Figure 2, the radio interface protocol has horizontal layers comprising a physical layer, a data link layer, and a network layer, and has vertical planes comprising a user plane (U-plane) for transmitting user data and a control plane (C-plane) for transmitting control information.

The user plane is a region that handles traffic information of the user, such as voice or Internet protocol (IP) packets, while the control plane is a region that handles control information for an interface of a network, maintenance and management of a call, and the like.

The protocol layers in Figure 2 can be divided into a first layer (L1), a second layer (L2), and a third layer (L3) based on the three lower layers of an open system interconnection (OSI) standard model. Each layer will be described in more detail as follows.

The first layer (L1), namely, the physical layer, provides an information transfer service to an upper layer by using various radio transmission techniques. The physical layer is connected to an upper layer called a medium access control (MAC) layer, via a transport channel. The MAC layer and the physical layer send and receive data with one another via the transport channel.

The second layer (L2) includes a MAC layer, a radio link control (RLC) layer, a broadcast/multicast control (BMC) layer, and a packet data convergence protocol (PDCP) layer.

The MAC layer provides an allocation service of the MAC parameters for allocation and re-allocation of radio resources. The MAC layer is connected to an upper layer called the radio link control (RLC) layer, via a logical channel.

Various logical channels are provided according to the kind of transmitted information. In general, when information of the control plane is transmitted, a control channel is used. When information of the user plane is transmitted, a traffic channel is used.

The MAC layer can be divided into a MAC-b sub-layer, a MAC-d sub-layer, a MAC-c/sh sub-layer, and a MAC-hs sub-layer according to the type of transport channel to be managed.

The MAC-b sub-layer manages a BCH (Broadcast Channel), which is a transport channel handling the broadcasting of system information.

The MAC-d sub-layer manages a dedicated channel (DCH), which is a dedicated transport channel for a specific terminal. Accordingly, the MAC-d sub-layer of the UTRAN is located in a serving radio network controller (SRNC) that manages a corresponding terminal, and one MAC-d sub-layer also exists within each terminal (UE).

The MAC-c/sh sub-layer manages a common transport channel, such as a forward access channel (FACH) or a downlink shared channel (DSCH); which is shared by a plurality of terminals. In the UTRAN, the MAC-c/sh sub-layer is located in a controlling radio network controller (CRNC). As the MAC-c/sh sub-layer manages the channel being shared by all terminals within a cell region, a single MAC-c/sh sub-layer exists for each cell region. Also, one MAC-c/sh sub-layer exists in each terminal (UE).

The MAC-hs sub-layer manages a HS-DSCH (High Speed Downlink Shared Channel), which is a downlink transport channel for high-speed data transmissions. In the UTRAN, one MAC-hs sub-layer is located at a Node-B in each cell region, and one MAC-hs sub-layer also exists in each terminal (UE).

The RLC layer supports reliable data transmissions, and performs a segmentation and concatenation function on a plurality of RLC service data units (RLC SDUs) delivered from an upper layer. When the RLC layer receives the RLC SDUs from the upper layer, the RLC layer adjusts the size of each RLC SDU in an appropriate manner upon considering processing capacity, and then creates certain data units with header information added thereto. The created data units are called protocol data units (PDUs), which are then transferred to the MAC layer via a logical channel. The RLC layer includes a RLC buffer for storing the RLC SDUs and/or the RLC PDUs.

The BMC layer schedules a cell broadcast message (referred to as a `CB message', hereinafter) received from the core network, and broadcasts the CB messages to terminals located in a specific cell(s). The BMC layer of the UTRAN generates a broadcast / multicast control (BMC) message by adding information, such as a message ID (identification), a serial number, and a coding scheme to the CB message received from the upper layer, and transfers the BMC message to the RLC layer. The BMC messages are transferred from the RLC layer to the MAC layer through a logical channel, i.e., the CTCH (Common Traffic Channel). The CTCH is mapped to a transport channel, i.e., a FACH, which is mapped to a physical channel, i.e., a S-CCPCH (Secondary Common Control Physical Channel).

The PDCP (Packet Data Convergence Protocol) layer, as a higher layer of the RLC layer, allows the data transmitted through a network protocol (such as an IPv4 or IPv6) to be effectively transmitted on a radio interface with a relatively small bandwidth. To achieve this, the PDCP layer performs the function of reducing unnecessary control information used for a wired network, and this type of function is called, header compression.

There is a radio resource control (RRC) layer at a lowermost portion of the L3 layer. The RRC layer is defined only in the control plane, and handles the controlling of logical channels, transport channels, and physical channels with respect to setting, resetting, and releasing of radio bearers. The radio bearer service refers to a service that the second layer (L2) provides for data transmission between the terminal and the UTRAN, and in general, setting the radio bearer refers to defining the protocol layers and the channel characteristics of the channels required for providing a specific service, as well as respectively setting substantial parameters and operation methods.

The RLC layer can belong to the user plane or to the control plane depending upon the type of layer connected at the upper layer of the RLC layer. That is, if the RLC layer receives data from the RRC layer, the RLC layer belongs to the control plane. Otherwise, the RLC layer belongs to the user plane.

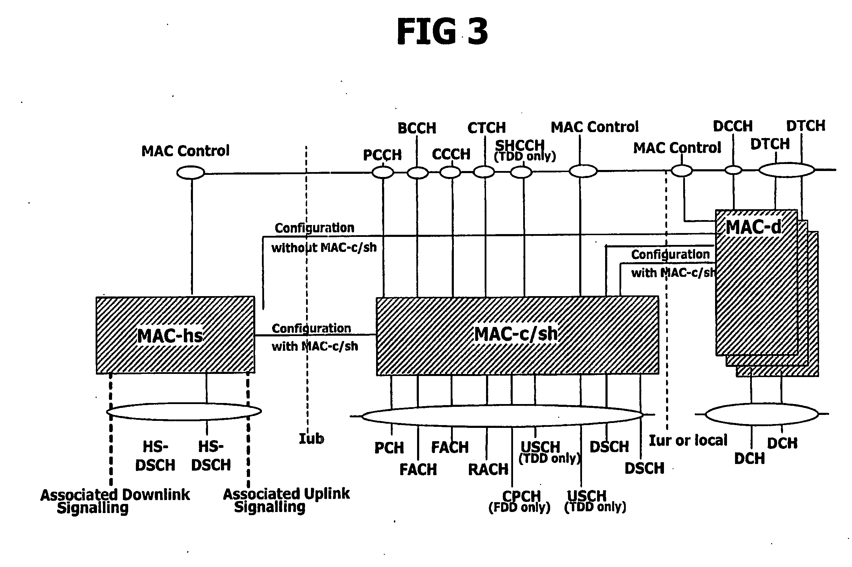

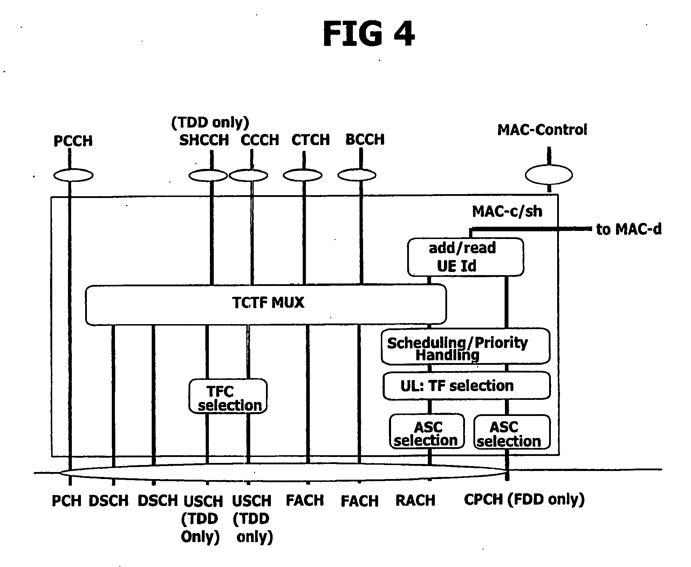

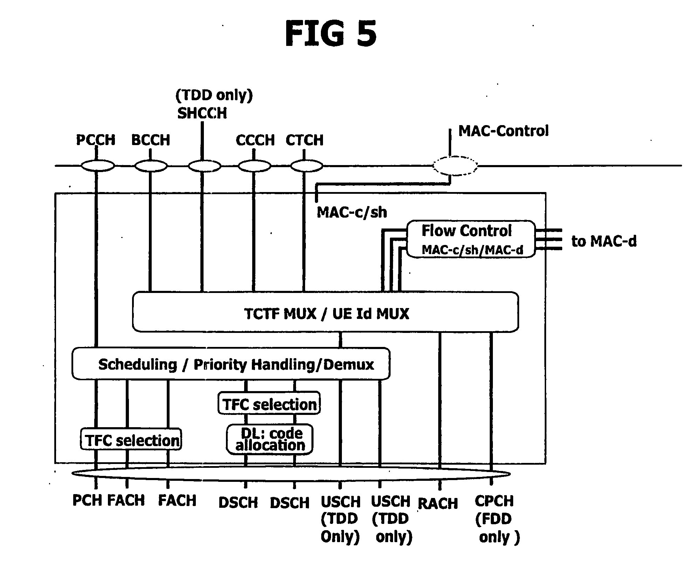

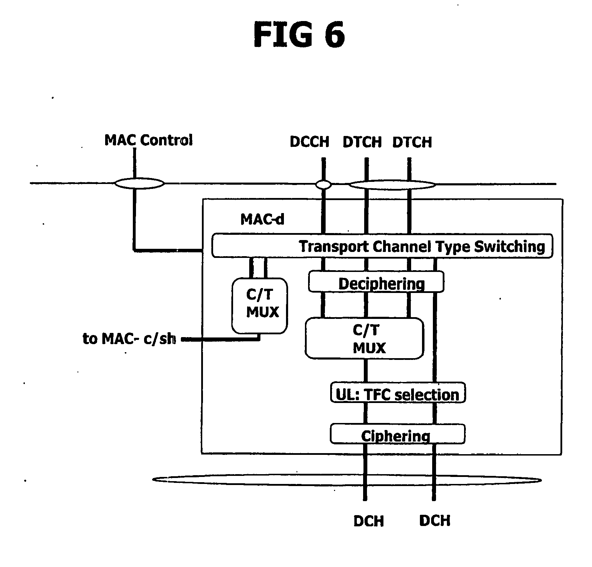

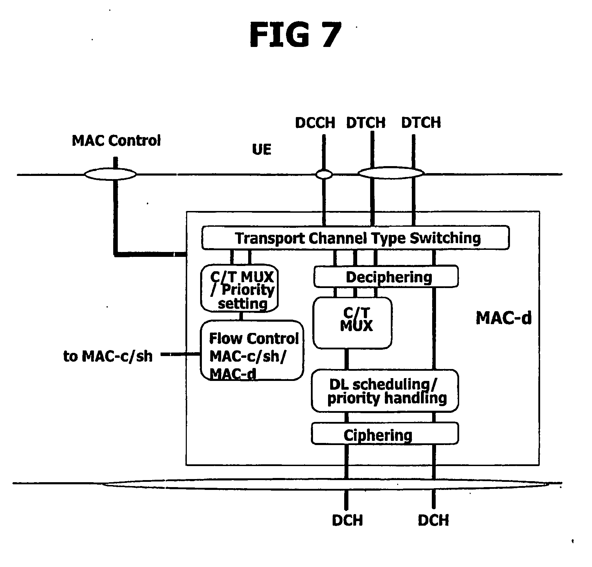

The MAC header will now be described in greater detail. Figure 3 shows a structure of a MAC layer for the UTRAN. Figures 4 to 7 show structures of the MAC-d and MAC-c/sh sub-layer of the UTRAN, in which the square blocks show each function of the MAC layer. The primary functions thereof will now be described.

Typically, a protocol entity can receive data packets in the form of service data units (SDUs), and can send data packets in the form of protocol data units (PDUs). For example, in the UE for the uplink, an RLC layer sends data packets (RLC PDUs) to the MAC layer via a logical channel. The RLC PDUs sent by the RLC layer is received by the MAC layer in the form of MAC SDUs. The MAC layer further processes these MAC SDUs into MAC PDUs, which are then sent to the physical layer via a transport channel.

At the MAC layer, all MAC PDUs (Protocol Data Units) delivered to the physical layer via a transport channel during one transmission time interval (TTI) are defined as a Transport Block Set (TBS). A TBS may consist of one or several Transport Blocks (i.e., Data Blocks), each containing one MAC PDU. The Transport Blocks can be transmitted in the order as delivered from the RLC layer. When the MAC layer performs multiplexing of RLC PDUs from different logical channels, the order of all Transport Blocks originating from the same logical channel can be the same as the order of the sequence delivered from the RLC layer. The order of the different logical channels in a TBS is set by the MAC protocol.

The MAC layer performs the function of identifying the UEs and the logical channels. There are two main reasons for identification: first, the UEs need to be distinguished from one another because many UEs share a common transport channel; and second, the logical channels must be distinguished from one another because logical channel multiplexing is performed. In case of uplink, without any identification, the receiving end (i.e., the UTRAN) cannot determine which UE sent the data units and cannot determine which logical channel was used in sending the data units.

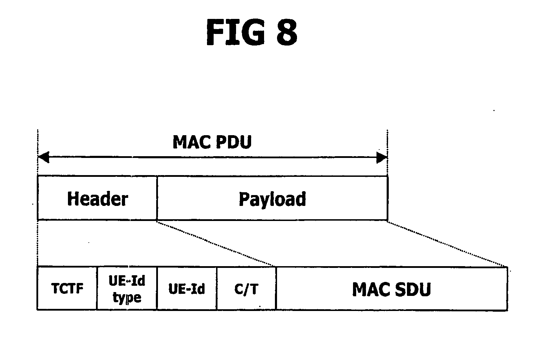

For identification, the MAC layer adds one or more of the following parameters; a TCTF (target channel type field), a UE-ID type, a UE-ID, and/or a C/T(Control/Traffic) field, to form a header of the MAC PDU. According to the related art, a MAC header is added to each MAC SDU (Service Data Unit) within a MAC PDU. That is, even those MAC SDUs that are transmitted during the same TTI have different MAC headers added thereto. Figure 8 shows a format of the MAC PDU.

Identification of the UE (i.e., a UE-ID field) is necessary when a dedicated logical channel (such as DCCH or DTCH) is mapped to a common transport channel (such as the RACH, FACH, CPCH, DSCH or USCH). To achieve this, the MAC layer adds a radio network temporary identity (RNTI) (which is a type of identification information for a UE) to the UE-ID field of the header. There are three types of RNTIs: a U-RNTI (UTRAN RNTI), a C-RNTI (Cell RNTI), and a DSCH-RNTI. Thus, a UE-ID type field that indicates the type of RNTI used is also transmitted as part of the header.

There are two kinds of identifications for the logical channel: one is a TCTF, and the other is a C/T field. The TCTF is required for the transport channel where a dedicated logical channel (such as a DCCH and DTCH) can be mapped together with other logical channels. That is, for FDD (frequency division duplex), a TCTF is required only for the RACH and the FACH, while for TDD (time division duplex), a TCTF is also required for the USCH and the DSCH.

Referring to FDD, the TCTF for the FACH identifies that the mapped logical channel is a BCCH, a CCCH, or a CTCH, or is a dedicated logical channel (DCCH or DTCH), while the TCTF for the RACH identifies that the mapped logical channel is a CCCH or a dedicated logical channel. However, the TCTF does not identify the particular type of dedicated logical channel that was used.

The identification of the dedicated logical channel is provided by the C/T field. The reason for this is that, first, unlike other logical channels, several dedicated logical channels can be mapped to one transport channel, and, second, the dedicated logical channel is handled by the MAC-d of the SRNC, while other logical channels are handled by the MAC-c/sh of the CRNC.

Each of the dedicated logical channels mapped to one transport channel has a logical channel identifier, which is used as the C/T field value. However, if only one dedicated logical channel is mapped to one transport channel, the C/T field is not necessary.

Table 1 below shows the different identifiers of a MAC header that are used according to the mapping relationship between logical channels and transport channels for FDD. In Table 1, a C/T field exists when several dedicated logical channels (DCCH or DTCH) are mapped. Also, "N" indicates that there is no header, "-" indicates that there is no mapping relationship, and "UE-ID" indicates that both a UE-ID field and a UE-ID type field exist. A UE-ID field always exists together with a UE-ID type field.

**[Table 1]**

| | DCH | RACH | FACH | DSCH | CPCH | BCH | PCH |
|---|---|---|---|---|---|---|---|
| DCCH or DTCH | C/T | TCTF UE-ID C/T | TCTF UE-ID C/T | UE-ID C/T | UE-ID C/T | - | - |
| BCCH | - | - | TCTF | - | - | N | - |
| PCCH | - | - | - | - | - | - | N |
| CCCH | - | TCTF | TCTF | - | - | - | - |
| CTCH | - | - | TCTF | - | - | - | - |

In the related art, when the DTCH or DCCH logical channels are mapped to certain transport channels (RACH, FACH, DSCH, CPCH), both a UE-ID and a UE-ID type are added by the MAC layer to the header of every MAC SDU.

In this manner, if there is more than one MAC SDU to be transmitted during one TTI and the same MAC header is added to every MAC SDU, the related art technique redundantly attaches a MAC header to every MAC SDU during one TTI. In particular, when the DTCH or DCCH data is transmitted over a common transport channel such as the RACH, the terminal identifier (UE-ID) field of 16 or 32 bits and the UE-ID type field of 2 bits are redundantly added to every MAC SDU.

The present inventors realized that the related art is disadvantageous because the adding of the same UE-ID and UE-ID type to each header of each MAC SDU is repetitive and unnecessary. Accordingly, due to the redundancy in transmitting protocol data units, the related art is quite ineffective and wastes much radio resources.

WO 01/69952 A1 describes a method wherein a radio link control stage processes separately first data units containing information items of a specific type and second data units not containing information items of said type. A control stage for access to the media delivers the first data units through a first dedicated transport channel and the second data units through a second dedicated transport channel. The data units delivered through said dedicated transport channels are supplied to an encoding and multiplexing stage to form at least a train of symbols relative to a dedicated physical channel and supplied to a radio transmission stage.

EP 1 176 780 A1 describes a method for transmitting data packets is described. The method includes determining from the first header part of first data packets the original first destination address, storing the original first destination address of the first data packet in storing means, discarding the first header part, storing in storing means the first body part of the first data packet. Thereafter, a concatenated or second data packet is made that includes in the body part a data part including the first body parts and a content information part including information about the number and position of the first body parts. After this, the concatenated or second data packet is transmitted to the second destination address.

### DISCLOSURE OF THE INVENTION

Therefore, an object of the present invention is to provide a data transmission method of a mobile communication system capable of concatenating two or more service data units to be transferred over the same channel into one protocol data unit having a single header in order to avoid redundancy of header information.

The object is solved as the features of the independent claims.

Preferably, a mobile communication system comprising: a protocol layer for generating a protocol data unit (PDU) comprising a payload formed by concatenating one or more service data units and having a header added thereto, and transferring the PDU to a lower layer a transmission time interval (TTI).

Preferably, the service data units are received from an upper layer of the protocol layer.

Preferably, the service data units have the same destination address.

Preferably, the service data units are transferred over the same transport channel.

Preferably, the protocol layer is a medium access control (MAC) sub-layer located below a MAC sub-layer managing a dedicated resource.

Preferably, the protocol layer is a medium access control (MAC) sub-layer managing a common resource.

Preferably, the header includes information regarding an identifier (UE-ID) of a terminal.

Preferably, the header further includes information regarding the type of terminal identifier.

Preferably, the header includes information regarding a logical channel.

Preferably, there is further provided a mobile communication system including a protocol layer for receiving one protocol data unit (PDU) from a lower layer at a transmission time interval (TTI), detecting a header from the received PDU, and disassembling a payload comprising one or more service data unit (SDUs).

Preferably, the protocol data units are received over the same transport channel.

Preferably, the protocol layer is a medium access control (MAC) sub-layer located below a MAC sub-layer managing a dedicated resource.

Preferably, the protocol layer is a medium access control (MAC) sub-layer managing a common resource.

Preferably, if the header includes terminal identifier information, the protocol layer checks whether the terminal identifier is identical to an identifier of a terminal to which the protocol layer itself belongs to, and if the two terminal identifiers are identical, the protocol layer transmits the disassembled SDUs to an upper layer entity that the header information indicates. If however, the two terminal identifiers are not identical, the protocol layer discards the received PDU.

Preferably, there is further provided a protocol data transmission method including: concatenating one or more service data units (SDUs) received from an upper layer to constitute a payload; adding a header to the payload to generate a PDU; transferring the generated PDU to a lower layer for a transmission time interval (TTI); and transmitting the generated PDU to a receiving end through a physical layer service.

Preferably, there is further provided a protocol data receiving method including: receiving one protocol data unit (PDU) from a lower layer at a transmission time interval (TTI); separating a header and a payload from the received PDU; disassembling the payload into one or more service data units (SDUs); and transferring the disassembled SDUs to an upper layer.

Additional advantages, objects, and features of the invention will be set forth in part in the description which follows and in part will become apparent to those having ordinary skill in the art upon examination of the following or may be learned from practice of the invention. The objects and advantages of the invention may be realized and attained as particularly pointed out in the appended claims.

### BRIEF DESCRIPTION OF THE DRAWINGS

The invention will be described in detail with reference to the following drawings in which like reference numerals refer to like elements wherein:
Figure 1 illustrates the UMTS network architecture;
Figure 2 illustrates the radio interface protocol architecture between the terminal and UTRAN that are based upon the 3GPP wireless access network standards;
Figure 3 illustrates a structure of a MAC layer of a general UTRAN;
Figure 4 illustrates a structure of a MAC-c/sh sub-layer of a general terminal (UE);
Figure 5 illustrates a structure of a MAC-c/sh sub-layer of the general UTRAN;
Figure 6 illustrates a structure of a MAC-d sub-layer of the general terminal (UE);
Figure 7 illustrates a MAC-d sub-layer of the general UTRAN;
Figure 8 illustrates a format of a general MAC PDU;
Figure 9 illustrates a format of a MAC-c/sh header in accordance with one embodiment of the present invention;
Figures 10A to 10E illustrate formats of a MAC-c/sh header in accordance with one embodiment of the present invention;
Figures 11A and 11B illustrate formats of the MAC-c/sh SDU in accordance with one embodiment of the present invention;
Figure 12 illustrates a structure of the MAC-c/sh sub-layer in accordance with one embodiment of the present invention;
Figure 13 illustrates a structure of the MAC-c/sh sub-layer of the UTRAN in accordance with one embodiment of the present invention; and
Figure 14 illustrates a transmission process of the MAC-c/sh in accordance with one embodiment of the present invention.

### BEST MODE FOR CARRYING OUT THE INVENTION

For exemplary purposes only, the features of the present invention will be described herebelow with respect to a MAC-c/sh, a particular type of MAC layer entity. However, the teachings and suggestions of the present invention can also be applied to other appropriate types of MAC layer entities, in particular those MAC entities that are currently under development for handling high-speed data packet transmissions. For example, it is foreseen that the teachings and suggestions of the present invention would be applicable to various enhancements of uplink dedicated channel techniques.

As high-speed data packet transmission technology evolves with the aim of using minimal radio access and network resources to handle large amounts of data, the motivation to apply the teachings and suggestions of the present invention and variations thereof that prevent the waste of radio access and network resources is clearly provided to those having ordinary skill in the art.

Also, it should be noted that the present invention will be described with respect to certain types of logical channels, transport channels and physical channels. However, the teachings and suggestions of the present invention are equally applicable to various logical channels (dedicated, common, etc.), which are mapped to various transport channels (dedicated, common, etc.), which are then again mapped to various physical channels (dedicated, common, etc.).

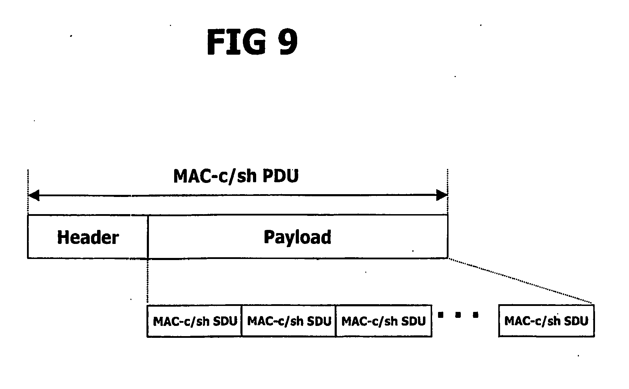

Figure 9 illustrates a format of a MAC-c/sh header in accordance with one embodiment of the present invention. As shown in Figure 9, one PDU of the MAC-c/sh is transmitted through a transport channel at a TTI. Each PDU comprises one MAC-c/sh header and one or more of MAC-c/sh SDUs. That is, a payload of the MAC-c/sh PDU includes one or more of MAC-c/sh SDUs. The MAC-c/sh PDU can be considered to be the same as a MAC PDU. One MAC PDU is transmitted to the transport channel during one TTI. All the MAC-c/sh SDUs included in the MAC PDU should be related to one terminal.

Unlike the related art, according to the transmission method in accordance with the present invention, since only one UE-ID field and only one UE-ID type field are transmitted during one TTI, radio (wireless) resources can be saved.

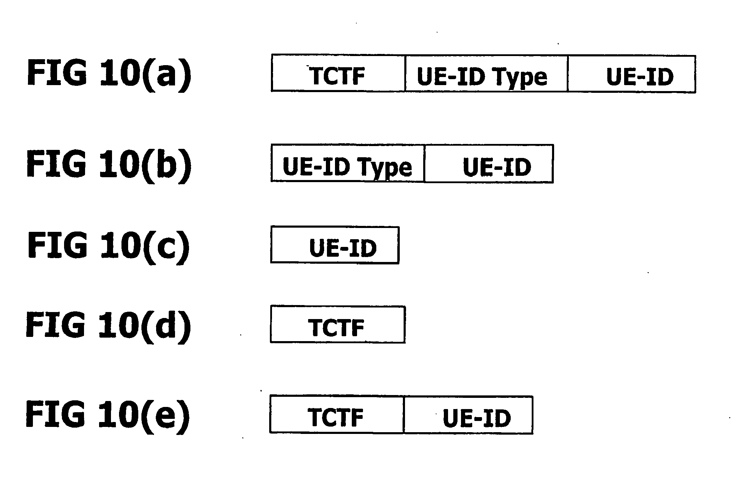

Figures 10A to 10E illustrate formats of a MAC-c/sh header in accordance with one embodiment of the present invention, showing types of MAC-c/sh header formats for implementing the present invention.

In the drawings, a TCTF is a field indicating a type of a logical channel. Specifically, the TCTF is an indicator indicating whether a logical channel that has transferred a corresponding MAC-c/sh SDU is a CCCH, a CTCH or a DCCH/DTCH.

A UE-ID type is a field indicating a type of an UE-ID included in a header. Specifically, the UE-ID type identifies a C-RNTI, a U-RNTI, a DSCH-RNTI, a terminal group indicator or a broadcast and multicast service indicator.

A UE-ID is a field including information for identifying a terminal (UE) that transmits a corresponding MAC-c/sh SDU, information for identifying a specific terminal group or information for identifying a specific service related to a corresponding UE.

The format of the MAC-c/sh header as shown in Figure 10A can be used when a logical channel used in transmitting the MAC-c/sh SDU is a dedicated logical channel, and a common transport channel uses various types of UE-IDs and mapped to several types of logical channels.

The format of the MAC-c/sh header as shown in Figure 10B can be used when a logical channel used in transmitting the MAC-c/sh SDU is a dedicated logical channel, and a common transport channel uses various types of UE-IDs.

The format of the MAC-c/sh header as shown in Figure 10C can be used when a logical channel used in transmitting the MAC-c/sh SDU is a dedicated logical channel, and a common transport channel uses one type of UE-ID.

The format of the MAC-c/sh header as shown in Figure 10D can be used when a common transport channel used in transmitting the MAC-c/sh SDU is mapped to various types of logical channels.

The format of the MAC-c/sh header as shown in Figure 10E can be used when a logical channel used in transmitting the MAC-c/sh SDU is a dedicated logical channel, and a common transport channel uses one type of UE-ID and is mapped to various types of logical channels.

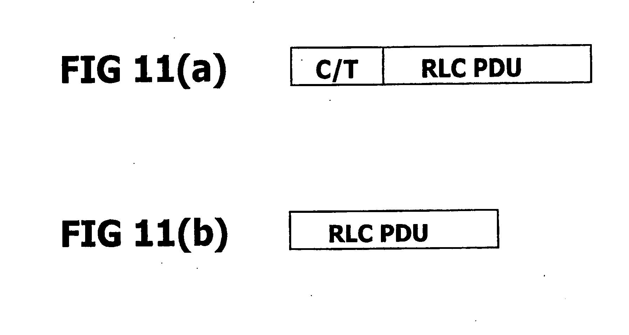

Figures 11A and 11B illustrate formats of the MAC-c/sh SDU in accordance with one embodiment of the present invention, showing various types of MAC-c/sh SDU formats for implementing the present invention.

A format of the MAC-c/sh SDU as shown in Figure 11A comprises only an RLC PDU and can be used when a logical channel used in transmitting the MAC-c/sh SDU is a dedicated logical channel and only one such dedicated logical channel exists. That is, one dedicated logical channel is mapped to one transport channel. The RLC PDU is equivalent to the MAC-c/sh SDU.

A format of the MAC-c/sh SDU as shown in Figure 11B is used when a logical channel used in transmitting the MAC-c/sh SDU is a common logical channel. In case of the common logical channel, no multiplexing takes place, thus the MAC-c/sh SDU is the same as the RLC PDU. Here, the MAC-c/sh SDU is the same as the MAC-d PDU.

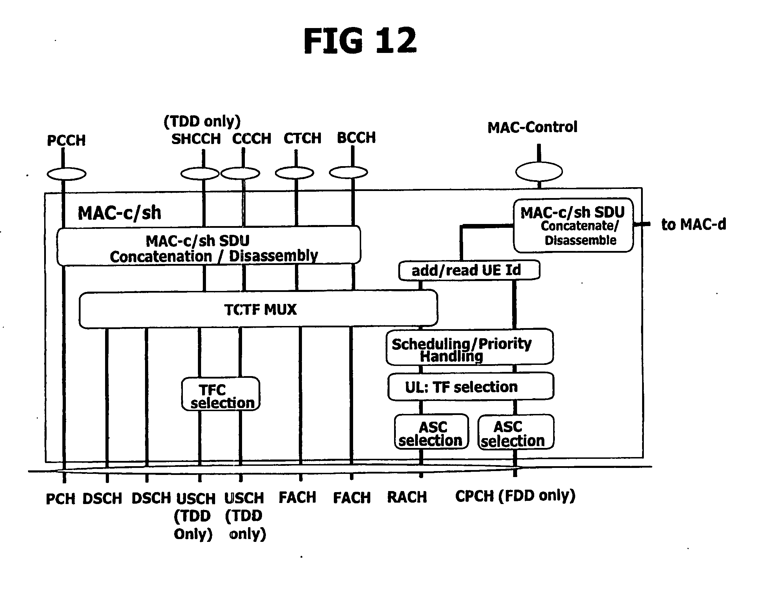

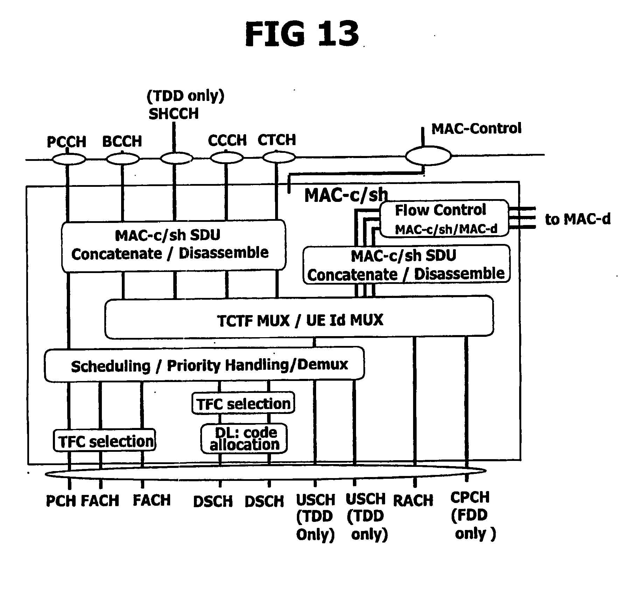

Figure 12 illustrates a structure of the MAC-c/sh sub-layer in accordance with one embodiment of the present invention, and Figure 13 illustrates a structure of the MAC-c/sh sub-layer of the UTRAN in accordance with one embodiment of the present invention.

As shown in Figures 12 and 13, in the present invention, a function of concatenating (and disassembling) of the MAC-c/sh SDU is added to the related art MAC-c/sh sub-layer in the UTRAN and terminal (UE), respectively. For a downlink transport channel, the MAC-c/sh of the UTRAN performs a function of concatenating the MAC-c/sh SDU, and the MAC-c/sh of the terminal performs a function of disassembling the MAC-c/sh SDU. Meanwhile, for an uplink transport channel, the MAC-c/sh of the terminal performs a function of concatenating the MAC-c/sh SDU and the MAC-c/sh of the UTRAN performs a function of disassembling the MAC-c/sh SDU.

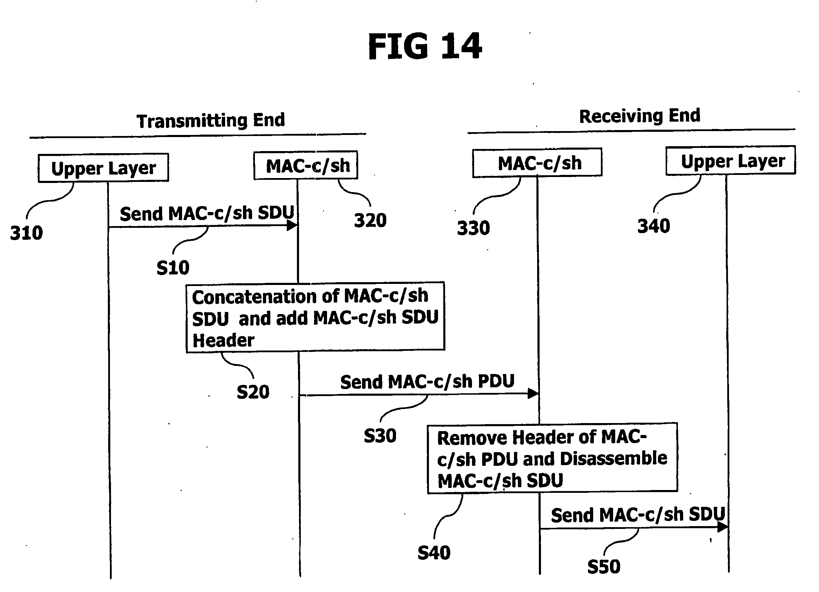

Figure 14 illustrates a transmission process of the MAC-c/sh in accordance with one embodiment of the present invention.

For downlink transmission, a transmitting end is the UTRAN and a receiving end is the terminal. Meanwhile, for uplink transmission, the transmitting end is the terminal and the receiving end is the UTRAN. In Figure 14, an upper layer refers to a layer positioned at an upper portion of the MAC-c/sh. Namely, the upper layer is the MAC-d if a dedicated logical channel is used, while the upper layer is the RLC if a common logical channel is used.

First, when a MAC-c/sh SDU is transferred from an upper layer 310 to a MAC-c/sh 320 (step S10), the MAC-c/sh 320 concatenates a plurality of MAC-c/sh SDUs to be transmitted during one TTI to form a payload, and adds a MAC-c/sh header to the payload to generate one MAC-c/sh PDU (step S20).

The MAC-c/sh 320 of the sending end transfers one MAC-c/sh PDU to a MAC-c/sh 330 of the receiving end through a physical layer service at every TTI (step S30).

The MAC-c/sh 330 removes the MAC-c/sh header from the received MAC-c/sh PDU, and disassembles the concatenated MAC-c/sh SDUs (step S40). And then, the MAC-c/sh 330 transfers the disassembled MAC-c/sh SDUs to an upper layer 340 (step S50).

If terminal identifier (UE-ID) information is included in the MAC-c/sh header, the MAC-c/sh 330 checks whether the terminal identifier (UE-ID) included in the header is identical to an identifier (UE-ID) of a terminal to which the MAC-c/sh 330 itself belongs to. If the two terminal identifiers are identical, the MAC-c/sh 330 transfers the disassembled upper layer PDUs to an upper layer entity that the header information indicates. Thereafter, the MAC-c/sh 330 transfers the MAC-c/sh SDUs to the upper layer via a logical channel that the header information indicates. If, however, the two terminal identifiers are not identical, the MAC-c/sh 330 discards the received MAC-c/sh PDU.

One embodiment of the present invention pertains to a method of processing protocol data by a terminal comprising concatenating two or more data units received from an upper layer for one transmission time interval (TTI); and adding a single header to the concatenated data units.

Another embodiment of the present invention pertains to a method of processing data blocks by user equipment in radio communications, the method comprising detecting two or more data blocks sent from a higher layer entity; performing concatenation on the detected data blocks to form a concatenated data block; adding a single header to the concatenated data block; and sending the header-added concatenated data block to a lower layer entity.

Another embodiment of the present invention pertains to a method of processing data units comprising receiving one or more service data units from an upper layer; concatenating the service data units to form a single medium access control payload (MAC payload); adding a single header to the medium access control payload (MAC payload) to form a medium access control protocol data unit (MAC PDU); and sending the medium access control protocol data unit (MAC PDU) to a lower layer.

Another embodiment of the present invention pertains to a common medium access control (MAC) layer for a user equipment comprising a first entity to receive per transmission time interval (TTI) one or more service data units from an upper layer; and a second entity to concatenate two or more service data units into a medium access control payload, to add a single header to the medium access control payload to form a medium access control protocol data unit, and to send the medium access control protocol data unit to a lower layer.

### INDUSTRIAL APPLICABILITY

As so far described, the present invention newly defines the structure of protocol data unit transmitted via a transport channel, and a transmission method is provided in order to avoid redundant attachment of a terminal identifier (UE-ID) and a UE-ID type information.

In addition, in the present invention, because only one terminal identifier (UE-ID) and the UE-ID type are added during one TTI, the efficiency of data transmission is increased and waste of the radio resources is remarkably reduced.

In particular, the present invention being implemented in a terminal (UE) results in significant reductions in the amount of radio resources that need to be used on the uplink. As minimizing the required battery power and signal processing for the terminal (UE) is always desirable, the present invention advantageously provides more efficient uplink data transmissions.

The foregoing embodiments and advantages are merely exemplary and are not to be construed as limiting the present invention. The present teachings can be readily applied to other types of methods and apparatuses. The description of the present invention is intended to be illustrative, and not to limit the scope of the claims. Many alternatives, modifications, and variations will be apparent to those skilled in the art. In the claims, means-plus-function clauses are intended to cover the structure described herein as performing the recited function and not only structural equivalents but also equivalent structures.

## Claims

1. A method of uplink processing in a wireless communication system, the method comprising:
receiving (S10) a plurality of MAC (Medium Access Control) service data units of the same size by a MAC layer having a first MAC sub-layer and a second MAC sub-layer (320);
concatenating (S20) the plurality of MAC service data units of the same size;
adding (S20) a MAC header to the plurality of concatenated MAC service data units to produce a MAC protocol data unit, the MAC header comprising a channel identifier; and
transmitting the MAC protocol data unit to a lower layer through a transport channel,
wherein the channel identifier identifies a logical channel which is located between a RLC (Radio Link Control) layer and the MAC layer, and the transport channel is located between the MAC layer and the lower layer,
wherein the second MAC sub-layer concatenates the plurality of MAC service data units,
wherein the first MAC sub-layer is a MAC-d sub-layer for a dedicated channel, and
wherein the second MAC sub-layer is located below the MAC-d sub-layer.

2. The method of claim 1, wherein the plurality of MAC service data units are received from at least one common logical channel.

3. The method of claim 1, wherein the plurality of MAC service data units are received from at least one dedicated logical channel.

4. The method of claim 1, wherein the channel identifier determines whether MAC service data units from a common logical channel or MAC service data units from a dedicated logical channel are being sent.

5. The method of claim 1, wherein the channel identifier determines a type of the logical channel.

6. The method of claim 1, wherein the MAC header further comprises a data identifier that determines one of a terminal transmitting the MAC service data units, a terminal group transmitting the MAC service, data units, and a service related to the MAC service data units.

7. The method of claim 6, wherein the MAC header includes a type identifier to determine a type of the data identifier being transmitted.

8. The method of claim 1, wherein the MAC protocol data unit is transmitted on the transport channel which is one of a random access channel and a dedicated channel

9. A terminal for uplink processing in a wireless communication system, the terminal comprising:
a receiving module for receiving a plurality of MAC (Medium Access Control) service data units of the same size;
a combining module for forming a plurality of concatenated MAC service data units from the plurality of received MAC service data units;
a header module for adding a MAC header to the plurality of concatenated MAC service data units to produce a MAC protocol data unit, the MAC header comprising a channel identifier, and
a transmitting module for transmitting the MAC protocol data unit to a lower entity through a transport channel,
wherein the plurality of MAC service data units are received by the receiving module in a MAC entity having a first MAC sub-entity and a second MAC sub-entity,
wherein the channel identifier identifies a logical channel which is located between a RLC (Radio Link Control) entity and the MAC entity, and the transport channel is located between the MAC entity and the lower entity,
wherein the plurality of concatenated MAC service data units is formed by the second MAC sub-entity,
wherein the first MAC sub-entity is a MAC-d sub-entity for a dedicated channel , and
wherein the second MAC sub-entity is located below the MAC-d sub-entity.

10. The terminal of claim 9, wherein the plurality of MAC service data units are received from at least one common logical channel.

11. The terminal of claim 9, wherein the plurality of MAC service data units are received from at least one dedicated logical channel.

12. The terminal of claim 9, wherein the channel identifier determines whether MAC service data units from a common logical channel or MAC service data units from a dedicated logical channel are being sent

13. The terminal of claim 9, wherein the channel identifier determines a type of the logical channel.

14. The terminal of claim 9, wherein the MAC header further comprises a data identifier that determines one of a terminal transmitting the MAC service data units, a terminal group transmitting the MAC service data units, and a service related to the MAC service data units.

15. The terminal of claim 14, wherein the header module is configured to include a type identifier in the MAC header, wherein the type identifier indicates a type of the data identifier being transmitted.

16. A method of uplink processing in a wireless communication system, the method comprising:
receiving a MAC (Medium Access Control) protocol data unit from a lower layer via a transport channel by a MAC layer having a first MAC sub-layer and a second MAC sub-layer, the MAC protocol data unit including a MAC header and a plurality of concatenated MAC service data units, the plurality of concatenated MAC service data units having the same size;
extracting the MAC header from the received MAC protocol data unit, the MAC header comprising a channel identifier, wherein the channel identifier identifies a logical channel which is located between a RLC (Radio Link Control) layer and the MAC layer, and the transport channel is located between the MAC layer and the lower layer, and
disassembling the plurality of concatenated MAC service data units and transmitting the individual MAC service data units to a RLC (Radio Link Control) layer,
wherein the second MAC sub-layer disassembles the plurality of concatenated MAC service data units,
wherein the first MAC sub-layer is a MAC-d sub-layer for a dedicated channel, and
wherein the second MAC sub-layer is located below the MAC-d sub-layer.

17. The method of claim 16 wherein the MAC header further comprises a data identifier that determines one of a terminal transmitting the MAC service data units, a terminal group transmitting the MAC service data units, and a service related to the MAC service data units.

18. The method of claim 16 further comprising:
examining the channel identifier in the MAC header to identify whether dedicated data is sent; and
mapping the dedicated data to at least one dedicated logical channel.

19. The method of claim 16 further comprising:
examining the channel identifier in the MAC header to identify whether common data is sent; and
mapping the common data to at least one common logical channel.

20. The method of claim 1 wherein the MAC header includes a type identifier to determine a type of the data identifier being transmitted.

21. The method of claim 1 wherein the MAC protocol data unit is received on the transport channel which is one of a random access channel and a dedicated channel.

22. A network apparatus for uplink processing in a wireless communication system, the network apparatus comprising:
a receiving module for receiving a MAC (Medium Access Control) protocol data unit from a lower layer via a transport channel, the MAC protocol data unit including a MAC header and a plurality of concatenated MAC service data units the plurality of concatenated MAC service data units having the same size;
a detecting module for extracting the MAC header from the received MAC protocol data unit, the MAC header comprising a channel identifier; and
a demultiplexing module for disassembling the plurality of concatenated MAC
service data units and transmitting the individual MAC service data units to a RLC (Radio Link Control) layer,
wherein the MAC protocol data unit is received by the receiving module in a MAC layer of the network having a first MAC sub-layer and a second MAC sub-layer,
wherein the channel identifier identifies a logical channel which is located between the RLC layer and the MAC layer, and the transport channel is located between the lower layer and the MAC layer, and
wherein the second MAC sub-layer disassembles the plurality of concatenated MAC service data units,
wherein the first MAC sub-layer is a MAC-d sub-layer for a dedicated channel , and
wherein the second MAC sub-layer is located below the MAC-d sub-layer.

23. The network apparatus of claim 22 wherein the MAC header further comprises a data identifier that determines one of a terminal transmitting the MAC service data units, a terminal group transmitting the MAC service data units, and a service related to the MAC service data units.

24. The network apparatus of claim 22 wherein the demultiplexing module is adapted to examine the channel identifier in the MAC header to identify whether MAC service data units from at least one dedicated logical channel are sent, and to map the MAC service data units to at least one dedicated logical channel.

25. The network apparatus of claim 22 wherein the demultiplexing module is adapted to examine the channel identifier in the MAC header to identify whether MAC service data units from at least one common logical channel are sent, and to map the MAC service data units to at least one common logical channel.

26. The network apparatus of claim 23 wherein the MAC header includes a type identifier to determine a type of the data identifier being transmitted.

27. The method of claim 1 or 16 wherein the second MAC sub-layer is for a common channel.

28. The method of claim 1 or 16 wherein the MAC protocol data unit is transmitted in one TTI (transmission Time Interval).

29. The terminal of claim 9, wherein the second MAC sub-entity is for a common channel.

30. The terminal of claim 9, wherein the MAC protocol data unit is transmitted in one TTI (Transmission Time Interval).

31. The network apparatus of claim 22 wherein the second MAC sub-layer is for a common channel.

32. The network apparatus of claim 22 wherein the MAC protocol data unit is received in one TTI (Transmission Time Interval).

## Patentansprüche

1. Verfahren für die Aufwärtsstreckenverarbeitung in einem drahtlosen Kommunikationssystem, wobei das Verfahren umfasst:
Empfangen (S 10) mehrerer MAC-Dienstdateneinheiten (Mediumzugriffsteuerungs-Dienstdateneinheiten) der gleichen Größe durch eine MAC-Schicht, die eine erste MAC-Unterschicht und eine zweite MAC-Unterschicht (320) besitzt;
Verketten (S20) der mehreren MAC-Dienstdateneinheiten der gleichen Größe;
Hinzufügen (S20) eines MAC-Kopfs zu den mehreren verketteten MAC-Dienstdateneinheiten, um eine MAC-Protokolldateneinheit zu erzeugen, wobei der MAC-Kopf einen Kanalidentifizierer umfasst; und
Übertragen der MAC-Protokolldateneinheit durch einen Transportkanal zu einer niedrigeren Schicht,
wobei der Kanalidentifizierer einen logischen Kanal identifiziert, der sich zwischen einer RLC-Schicht (Funkverbindungssteuerungs-Schicht) und der MAC-Schicht befindet, wobei sich der Transportkanal zwischen der MAC-Schicht und der niedrigeren Schicht befindet,
wobei die zweite MAC-Unterschicht die mehreren MAC-Dienstdateneinheiten verkettet,
wobei die erste MAC-Unterschicht eine MAC-d-Unterschicht für einen dedizierten Kanal ist, und
wobei sich die zweite MAC-Unterschicht unter der MAC-d-Unterschicht befmdet.

2. Verfahren nach Anspruch 1, bei dem die mehreren MAC-Dienstdateneinheiten von wenigstens einem gemeinsamen logischen Kanal empfangen werden.

3. Verfahren nach Anspruch 1, bei dem die mehreren MAC-Dienstdateneinheiten von wenigstens einem dedizierten logischen Kanal empfangen werden.

4. Verfahren nach Anspruch 1, bei dem der Kanalidentifizierer bestimmt, ob die MAC-Dienstdateneinheiten von einem gemeinsamen logischen Kanal oder die MAC-Dienstdateneinheiten von einem dedizierten logischen Kanal gesendet werden.

5. Verfahren nach Anspruch 1, bei dem der Kanalidentifizierer einen Typ des logischen Kanals bestimmt.

6. Verfahren nach Anspruch 1, bei dem der MAC-Kopf ferner einen Datenidentifizierer umfasst, der ein Endgerät, das die MAC-Dienstdateneinheiten überträgt, eine Endgerätegruppe, die die MAC-Dienstdateneinheiten überträgt, oder einen mit den MAC-Dienstdateneinheiten in Beziehung stehenden Dienst bestimmt.

7. Verfahren nach Anspruch 6, bei dem der MAC-Kopf einen Typidentifizierer enthält, um einen Typ des Datenidentifizierers, der übertragen wird, zu bestimmen.

8. Verfahren nach Anspruch 1, bei dem die MAC-Protokolldateneinheit auf dem Transportkanal übertragen wird, der ein Direktzugriffskanal oder ein dedizierter Kanal ist.

9. Endgerät für die Aufwärtsstreckenverarbeitung in einem drahtlosen Kommunikationssystem, wobei das Endgerät umfasst:
ein Empfangsmodul zum Empfangenen mehrerer MAC-Dienstdateneinheiten (Mediumzugriffsteuerungs-Dienstdateneinheiten) der gleichen Größe;
ein Kombiniermodul zum Bilden mehrerer verketteter MAC-Dienstdateneinheiten aus den mehreren empfangenen MAC-Dienstdateneinheiten;
ein Kopfmodul zum Hinzufügen eines MAC-Kopfs zu den mehreren verketteten MAC-Dienstdateneinheiten, um eine MAC-Protokolldateneinheit zu erzeugen, wobei der MAC-Kopf einen Kanalidentifizierer umfasst; und
ein Übertragungsmodul zum Übertragen der MAC-Protokolldateneinheit durch einen Transportkanal zu einer niedrigeren Entität,
bei dem die mehreren MAC-Dienstdateneinheiten durch das Empfangsmodul in einer MAC-Entität, die eine erste MAC-Unterentität und eine zweite MAC-Unterentität besitzt, empfangen werden,
wobei der Kanalidentifizierer einen logischen Kanal identifiziert, der sich zwischen einer RLC-Entität (Funkverbindungssteuerungs-Entität) und der MAC-Entität befindet, wobei sich der Transportkanal zwischen der MAC-Entität und der niedrigeren Entität befindet,
wobei die mehreren verketteten MAC-Dienstdateneinheiten durch die zweite MAC-Unterentität gebildet werden,
wobei die erste MAC-Unterentität eine MAC-d-Unterentität für einen dedizierten Kanal ist, und
wobei sich die zweite MAC-Unterentität unter der MAC-d-Unterentität befindet.

10. Endgerät nach Anspruch 9, bei dem die mehreren MAC-Dienstdateneinheiten von wenigstens einem gemeinsamen logischen Kanal empfangen werden.

11. Endgerät nach Anspruch 9, bei dem die mehreren MAC-Dienstdateneinheiten von wenigstens einem dedizierten logischen Kanal empfangen werden.

12. Endgerät nach Anspruch 9, bei dem der Kanalidentifizierer bestimmt, ob die MAC-Dienstdateneinheiten von einem gemeinsamen logischen Kanal oder die MAC-Dienstdateneinheiten von einem dedizierten logischen Kanal gesendet werden.

13. Endgerät nach Anspruch 9, bei dem der Kanalidentifizierer einen Typ des logischen Kanals bestimmt.

14. Endgerät nach Anspruch 9, bei dem der MAC-Kopf ferner einen Datenidentifizierer umfasst, der ein Endgerät, das die MAC-Dienstdateneinheiten überträgt, eine Endgerätegruppe, die die MAC-Dienstdateneinheiten überträgt, oder einen mit den MAC-Dienstdateneinheiten in Beziehung stehenden Dienst bestimmt.

15. Endgerät nach Anspruch 14, bei dem das Kopfmodul konfiguriert ist, um einen Typidentifizierer in den MAC-Kopf aufzunehmen, wobei der Typidentifizierer einen Typ des Datenidentifizierers, der übertragen wird, angibt.

16. Verfahren für die Aufwärtsstreckenverarbeitung in einem drahtlosen Kommunikationssystem, wobei das Verfahren umfasst:
Empfangen einer MAC-Protokolldateneinheit (Mediumzugriffsteuerungs-Protokolldateneinheit) über einen Transportkanal von einer niedrigeren Schicht durch eine MAC-Schicht, die eine erste MAC-Unterschicht und eine zweite MAC-Unterschicht besitzt, wobei die MAC-Protokolldateneinheit einen MAC-Kopf und mehrere verkettete MAC-Dienstdateneinheiten enthält, wobei die mehreren verketteten MAC-Dienstdateneinheiten die gleiche Größe besitzen;
Extrahieren des MAC-Kopfs aus der empfangenen MAC-Protokolldateneinheit, wobei der MAC-Kopf einen Kanalidentifizierer umfasst, wobei der Kanalidentifizierer einen logischen Kanal identifiziert, der sich zwischen einer RLC-Schicht (Funkverbindungssteuerungs-Schicht) und der MAC-Schicht befindet, wobei sich der Transportkanal zwischen der MAC-Schicht und der niedrigeren Schicht befindet; und
Zerlegen der mehreren verketteten MAC-Dienstdateneinheiten und Übertragen der einzelnen MAC-Dienstdateneinheiten zu einer RLC-Schicht (Funkverbindungssteuerungs-Schicht),
wobei die zweite MAC-Unterschicht die mehreren verketteten MAC-Dienstdateneinheiten zerlegt,
wobei die erste MAC-Unterschicht eine MAC-d-Unterschicht für einen dedizierten Kanal ist, und
wobei sich die zweite MAC-Unterschicht unter der MAC-d-Unterschicht befindet.

17. Verfahren nach Anspruch 16, bei dem der MAC-Kopf ferner einen Datenidentifizierer umfasst, der ein Endgerät, das die MAC-Dienstdateneinheiten überträgt, eine Endgerätegruppe, die die MAC-Dienstdateneinheiten überträgt, oder einen mit den MAC-Dienstdateneinheiten in Beziehung stehenden Dienst bestimmt.

18. Verfahren nach Anspruch 16, das ferner umfasst:
Untersuchen des Kanalidentifizierers in dem MAC-Kopf, um zu identifizieren, ob dedizierte Daten gesendet werden; und
Abbilden der dedizierten Daten auf wenigstens einen dedizierten logischen Kanal.

19. Verfahren nach Anspruch 16, das ferner umfasst:
Untersuchen des Kanalidentifizierers in dem MAC-Kopf, um zu identifizieren, ob gemeinsame Daten gesendet werden; und
Abbilden der gemeinsamen Daten auf wenigstens einen gemeinsamen logischen Kanal.

20. Verfahren nach Anspruch 17, bei dem der MAC-Kopf einen Typidentifizierer enthält, um einen Typ des Datenidentifizierers, der übertragen wird, zu bestimmen.

21. Verfahren nach Anspruch 16, bei dem die MAC-Protokolldateneinheit auf dem Transportkanal empfangen wird, der ein Direktzugriffskanal oder ein dedizierter Kanal ist.

22. Netzvorrichtung für die Aufwärtsstreckenverarbeitung in einem drahtlosen Kommunikationssystem, wobei die Netzvorrichtung umfasst:
ein Empfangsmodul zum Empfangen einer MAC-Protokolldateneinheit (Mediumzugriffsteuerungs-Protokolldateneinheit) über einen Transportkanal von einer niedrigeren Schicht, wobei die MAC-Protokolldateneinheit einen MAC-Kopf und mehrere verkettete MAC-Dienstdateneinheiten enthält, wobei die mehreren verketteten MAC-Dienstdateneinheiten die gleiche Größe besitzen;
ein Detektionsmodul zum Extrahieren des MAC-Kopfs aus der empfangenen MAC-Protokolldateneinheit, wobei der MAC-Kopf einen Kanalidentifizierer umfasst; und
eine Demultiplexiermodul zum Zerlegen der mehreren verketteten MAC-Dienstdateneinheiten und zum Übertragen der einzelnen MAC-Dienstdateneinheiten zu einer RLC-Schicht (Funkverbindungssteuerungs-Schicht),
wobei die MAC-Protokolldateneinheit durch das Empfangsmodul in einer MAC-Schicht des Netzes, die eine erste MAC-Unterschicht und eine zweite MAC-Unterschicht besitzt, empfangen wird,
wobei der Kanalidentifizierer einen logischen Kanal identifiziert, der sich zwischen der RLC-Schicht und der MAC-Schicht befindet, wobei sich der Transportkanal zwischen der niedrigeren Schicht und der MAC-Schicht befindet, und
wobei die zweite MAC-Unterschicht die mehreren verketteten MAC-Dienstdateneinheiten zerlegt,
wobei die erste MAC-Unterschicht eine MAC-d-Unterschicht für einen dedizierten Kanal ist, und
wobei sich die zweite MAC-Unterschicht unter der MAC-d-Unterschicht befindet.

23. Netzvorrichtung nach Anspruch 22, bei der der MAC-Kopf ferner einen Datenidentifizierer umfasst, der ein Endgerät, das die MAC-Dienstdateneinheiten überträgt, eine Endgerätegruppe, die die MAC-Dienstdateneinheiten überträgt, oder einen mit den MAC-Dienstdateneinheiten in Beziehung stehenden Dienst bestimmt.

24. Netzvorrichtung nach Anspruch 22, bei der das Demultiplexiermodul dazu ausgelegt ist, um den Kanalidentifizierer in dem MAC-Kopf zu untersuchen, um zu identifizieren, ob die MAC-Dienstdateneinheiten von wenigstens einem dedizierten logischen Kanal gesendet werden, und um die MAC-Dienstdateneinheiten auf wenigstens einen dedizierten logischen Kanal abzubilden.

25. Netzvorrichtung nach Anspruch 22, bei der das Demultiplexiermodul dazu ausgelegt ist, um den Kanalidentifizierer in dem MAC-Kopf zu untersuchen, um zu identifizieren, ob die MAC-Dienstdateneinheiten von wenigstens einem gemeinsamen logischen Kanal gesendet werden, und um die MAC-Dienstdateneinheiten auf wenigstens einen gemeinsamen logischen Kanal abzubilden.

26. Netzvorrichtung nach Anspruch 23, bei der der MAC-Kopf einen Typidentifizierer enthält, um einen Typ des Datenidentifizierers, der übertragen wird, zu bestimmen.

27. Verfahren nach Anspruch 1 oder 16, bei dem die zweite MAC-Unterschicht für einen gemeinsamen Kanal ist.

28. Verfahren nach Anspruch 1 oder 16, bei dem die MAC-Protokolldateneinheit in einem TTI (Übertragungszeitintervall) übertragen wird.

29. Endgerät nach Anspruch 9, bei dem die zweite MAC-Unterentität für einen gemeinsamen Kanal ist.

30. Endgerät nach Anspruch 9, bei dem die MAC-Protokolldateneinheit in einem TTI (Übertragungszeitintervall) übertragen wird.

31. Netzvorrichtung nach Anspruch 22, bei dem die zweite MAC-Unterschicht für einen gemeinsamen Kanal ist.

32. Netzvorrichtung nach Anspruch 22, bei dem die MAC-Protokolldateneinheit in einem TTI (Übertragungszeitintervall) empfangen wird.

## Revendications

1. Procédé de traitement de liaison montante dans un système de communication sans fil, le procédé comprenant:
la réception (S10) d'une pluralité d'unités de données de service MAC (commande d'accès au support) de la même taille par une couche MAC comprenant une première sous-couche MAC et une seconde sous-couche MAC (320);
la concaténation (S20) de la pluralité d'unités de données de service MAC de la même taille;
l'ajout (S20) d'un en-tête MAC à la pluralité d'unités de données de service MAC concaténées afin de produire une unité de données de protocole MAC, l'en-tête MAC comprenant un identifiant de canal; et
la transmission de l'unité de données de protocole MAC à une couche inférieure par l'intermédiaire d'un canal de transport,
dans lequel l'identifiant de canal identifie un canal logique qui se trouve entre une couche RLC (commande de liaison radio) et la couche MAC, et le canal de transport se trouve entre la couche MAC et la couche inférieure,
dans lequel la seconde sous-couche MAC concatène la pluralité d'unités de données de service MAC,
dans lequel la première sous-couche MAC est une sous-couche MAC-d pour un canal dédié, et
dans lequel la seconde sous-couche MAC se trouve au-dessous de la sous-couche MAC-d.

2. Procédé selon la revendication 1, dans lequel la pluralité d'unités de données de service MAC sont reçues en provenance d'au moins un canal logique commun.

3. Procédé selon la revendication 1, dans lequel la pluralité d'unités de données de service MAC sont reçues en provenance d'au moins un canal logique dédié.

4. Procédé selon la revendication 1, dans lequel l'identifiant de canal détermine si des unités de données de service MAC provenant d'un canal logique commun ou des unités de données de service provenant d'un canal logique dédié sont envoyées.

5. Procédé selon la revendication 1, dans lequel l'identifiant de canal détermine un type du canal logique.

6. Procédé selon la revendication 1, dans lequel l'en-tête MAC comprend en outre un identifiant de données qui détermine un élément parmi un terminal envoyant les unités de données de service MAC, un groupe de terminaux envoyant les unités de données de service MAC et un service relatif aux unités de données de service MAC.

7. Procédé selon la revendication 6, dans lequel l'en-tête MAC comprend un identifiant de type servant à déterminer un type de l'identifiant de données transmis.

8. Procédé selon la revendication 1, dans lequel l'unité de données de protocole MAC est transmise sur le canal de transport qui est un canal parmi un canal d'accès aléatoire et un canal dédié.

9. Terminal pour traitement de liaison montante dans un système de communication sans fil, le terminal comprenant:
un module de réception pour recevoir une pluralité d'unités de données de service MAC (commande d'accès au support) de la même taille;
un module de combinaison pour former une pluralité d'unités de données de service MAC concaténées à partir de la pluralité d'unités de données de service MAC reçues;
un module d'en-tête pour ajouter un en-tête MAC à la pluralité d'unités de données de service MAC concaténées afin de produire une unité de données de protocole MAC, l'en-tête MAC comprenant un identifiant de canal; et
un module de transmission pour transmettre l'unité de données de protocole MAC à une entité inférieure par l'intermédiaire d'un canal de transport,
dans lequel la pluralité d'unités de données de service MAC sont reçues par le module de réception dans une entité MAC comprenant une première sous-entité MAC et une seconde sous-entité MAC,
dans lequel l'identifiant de canal identifie un canal logique qui se trouve entre une entité RLC (commande de liaison radio) et l'entité MAC, et le canal de transport se trouve entre l'entité MAC et l'entité inférieure,
dans lequel la pluralité d'unités de données de service MAC concaténées sont formées par la seconde sous-entité MAC,
dans lequel la première sous-entité MAC est une sous-entité MAC-d pour un canal dédié, et
dans lequel la seconde sous-entité MAC se trouve au-dessous de la sous-entité MAC-d.

10. Terminal selon la revendication 9, dans lequel la pluralité d'unités de données de service MAC sont reçues en provenance d'au moins un canal logique commun.

11. Terminal selon la revendication 9, dans lequel la pluralité d'unités de données de service MAC sont reçues en provenance d'au moins un canal logique dédié.

12. Terminal selon la revendication 9, dans lequel l'identifiant de canal détermine si des unités de données de service MAC provenant d'un canal logique commun ou des unités de données de service MAC provenant d'un canal logique dédié sont envoyées.

13. Terminal selon la revendication 9, dans lequel l'identifiant de canal détermine un type du canal logique.

14. Terminal selon la revendication 9, dans lequel l'en-tête MAC comprend en outre un identifiant de données qui détermine un élément parmi un terminal envoyant les unités de données de service MAC, un groupe de terminaux envoyant les unités de données de service MAC et un service relatif aux unités de données de service MAC.

15. Terminal selon la revendication 14, dans lequel le module d'en-tête est configuré pour inclure un identifiant de type dans l'en-tête MAC, l'identifiant de type indiquant un type de l'identifiant de données transmis.

16. Procédé de traitement de liaison montante dans un système de communication sans fil, le procédé comprenant:
la réception d'une unité de données de protocole MAC (commande d'accès au support) en provenance d'une couche inférieure par l'intermédiaire d'un canal de transport par une couche MAC comprenant une première sous-couche MAC et une seconde sous-couche MAC, l'unité de données de protocole MAC comprenant un en-tête MAC et une pluralité d'unités de données de service MAC concaténées, la pluralité d'unités de données de service MAC concaténées ayant la même taille;
l'extraction de l'en-tête MAC de l'unité de données de protocole MAC reçue, l'en-tête MAC comprenant un identifiant de canal, l'identifiant de canal identifiant un canal logique qui se trouve entre une couche RLC (commande de liaison radio) et la couche MAC, et le canal de transport se trouvant entre la couche MAC et la couche inférieure; et
le désassemblage de la pluralité d'unités de données de service MAC concaténées et la transmission des unités de données de service MAC individuelles à une couche RLC (commande de liaison radio),
dans lequel la seconde sous-couche MAC désassemble la pluralité d'unités de données de service MAC concaténées,
dans lequel la première sous-couche MAC est une sous-couche MAC-d pour un canal dédié, et
dans lequel la seconde sous-couche MAC se trouve au-dessous de la sous-couche MAC-d.

17. Procédé selon la revendication 16, dans lequel l'en-tête MAC comprend en outre un identifiant de données qui détermine un élément parmi un terminal envoyant les unités de données de service MAC, un groupe de terminaux envoyant les unités de données de service MAC et un service relatif aux unités de données de service MAC.

18. Procédé selon la revendication 16, comprenant en outre:
l'examen de l'identifiant de canal figurant dans l'en-tête MAC pour identifier si des données dédiées sont envoyées; et
l'application des données dédiées à au moins un canal logique dédié.

19. Procédé selon la revendication 16, comprenant en outre:
l'examen de l'identifiant de canal figurant dans l'en-tête MAC pour identifier si des données communes sont envoyées; et
l'application des données communes à au moins un canal logique commun.

20. Procédé selon la revendication 17, dans lequel l'en-tête MAC comprend un identifiant de type servant à déterminer un type de l'identifiant de données transmis.

21. Procédé selon la revendication 16, dans lequel l'unité de données de protocole MAC est reçue sur le canal de transport qui est un canal parmi un canal d'accès aléatoire et un canal dédié.

22. Appareil de réseau pour traitement de liaison montante dans un système de communication sans fil, l'appareil de réseau comprenant:
un module de réception pour recevoir une unité de données de protocole MAC (commande d'accès au support) provenant d'une couche inférieure par l'intermédiaire d'un canal de transport, l'unité de données de protocole MAC comprenant un en-tête MAC et une pluralité d'unités de données de service MAC concaténées, la pluralité d'unités de données de service MAC concaténées ayant la même taille;
un module de détection pour extraire l'en-tête MAC de l'unité de données de protocole MAC reçue, l'en-tête MAC comprenant un identifiant de canal; et
un module de démultiplexage pour désassembler la pluralité d'unités de données de service MAC concaténées et transmettre les unités de données de service MAC individuelles à une couche RLC (commande de liaison radio),
dans lequel l'unité de données de protocole MAC est reçue par le module de réception dans une couche MAC du réseau comprenant une première sous-couche MAC et une seconde sous-couche MAC,
dans lequel l'identifiant de canal identifie un canal logique qui se trouve entre la couche RLC et la couche MAC, et le canal de transport se trouve entre la couche inférieure et la couche MAC,
dans lequel la seconde sous-couche MAC désassemble la pluralité d'unités de données de service MAC concaténées,
dans lequel la première sous-couche MAC est une sous-couche MAC-d pour un canal dédié, et
dans lequel la seconde sous-couche MAC se trouve au-dessous de la sous-couche MAC-d.

23. Appareil de réseau selon la revendication 22, dans lequel l'en-tête MAC comprend en outre un identifiant de données qui détermine un élément parmi un terminal envoyant les unités de données de service MAC, un groupe de terminaux envoyant les unités de données de service MAC et un service relatif aux unités de données de service MAC.

24. Appareil de réseau selon la revendication 22, dans lequel le module de démultiplexage est conçu pour examiner l'identifiant de canal figurant dans l'en-tête MAC afin d'identifier si des unités de données de service MAC provenant d'au moins un canal logique dédié sont envoyées, et pour appliquer les unités de données de service MAC à au moins un canal logique dédié.

25. Appareil de réseau selon la revendication 22, dans lequel le module de démultiplexage est conçu pour examiner l'identifiant de canal figurant dans l'en-tête MAC afin d'identifier si des unités de données de service MAC provenant d'au moins un canal logique commun sont envoyées, et pour appliquer les unités de données de service MAC à au moins un canal logique commun.

26. Appareil de réseau selon la revendication 23, dans lequel l'en-tête MAC comprend un identifiant de type servant à déterminer un type de l'identifiant de données transmis.

27. Procédé selon la revendication 1 ou 16, dans lequel la seconde sous-couche MAC est pour un canal commun.

28. Procédé selon la revendication 1 ou 16, dans lequel l'unité de données de protocole MAC est transmise dans un seul TTI (intervalle de temps de transmission).

29. Terminal selon la revendication 9, dans lequel la seconde sous-entité MAC est pour un canal commun.

30. Terminal selon la revendication 9, dans lequel l'unité de données de protocole MAC est transmise dans un seul TTI (intervalle de temps de transmission).

31. Appareil de réseau selon la revendication 22, dans lequel la seconde sous-couche MAC est pour un canal commun.

32. Appareil de réseau selon la revendication 22, dans lequel l'unité de données de protocole MAC est reçue dans un seul TTI (intervalle de temps de transmission).
